# EUROPEAN PATENT APPLICATION

(11) **EP 1 918 048 A1**
(43) Date of publication of application: **07.05.2008**
(21) Application number: 06767664.3
(22) Date of filing: 30.06.2006
(51) Int. Cl.: B22F 9/24, B22F 1/00, H01B 1/22

(54) **METHOD FOR PRODUCING NICKEL PARTICLES AND NICKEL PARTICLES PRODUCED BY THE METHOD, AND ELECTROCONDUCTIVE PASTE USING THE NICKEL PARTICLES**

(30) Priority: 30.06.2005 JP 2005191356
(71) Applicant: MITSUI MINING & SMELTING CO., LTD., Tokyo 141-8584 (JP)
(72) Inventor: MUKUNO, Takashi, Hikoshima Smelting Co., Ltd., Shimonoseki-shi, Yamaguchi, 7500093 (JP); YOSHIMARU, Katsuhiko, Hikoshima Smelting Co., Ltd., Shimonoseki-shi, Yamaguchi, 7500093 (JP)
(74) Representative: Bohmann, Armin K.
(86) International application number: PCT/JP2006/313056
(87) International publication number: WO 2007/004533

(57) **Abstract**

The present invention is directed at providing fine nickel particles with a sharp particle size distribution, and providing an electroconductive paste using the nickel particles. In order to obtain the nickel particles capable of achieving the purpose, a method for producing the nickel particle by elevating a temperature of the reactive solution containing a nickel salt and a polyol to a reduction temperature, and reducing the nickel salt in the reactive solution which is **characterized in that** the reactive solution is prepared to contain a carboxylic acid or an amine having a carboxyl functional group and/or an amino functional group, and a precious metal catalyst before the solution temperature is elevated to the reduction temperature. Nickel particles obtained with the production method have an average image analytical particle diameter of 1 nm to 300 nm.

## Description

### Technical Field

The present invention relates to a nickel particle, a production method thereof and an electroconductive paste. Specifically, the present invention relates to the nickel particle to be used as, for instance, a raw material of the nickel paste used for forming an internal electrode of a multi-layer ceramic capacitor, the production method thereof and the electroconductive paste using the nickel particle.

### Background Art

A nickel particle is used in various kinds of applications. For instance, as an electroconductive paste containing the nickel particle is used for forming various kinds of electrodes and circuits. Specifically, for forming an internal electrode of a multi-layer ceramic capacitor (Multi-layer Ceramic Capacitor: referred to as "MLCC" hereinafter). The internal electrode is obtained by applying an electroconductive paste containing nickel particles onto a dielectric ceramics or the like followed by sintering.

As a method for producing the nickel particle, for instance, Patent Document 1 (Japanese Patent Laid-Open No. S59-173206) discloses a reduction method by the steps of: suspending a solid compound such as hydroxide of nickel or the like in polyol or a polyol mixture which is liquid at a reaction temperature elevated to 85°C or more; reducing the solid compound suspended in the polyol; and separating the formed metallic deposit. The nickel particle can be obtained easily and economically by using the method.

[Patent Document 1] Japanese Patent Laid-Open No. S59-173206

However, in recent years, MLCC is required to be miniaturized and increase the capacitance, and accordingly the internal electrode is required to be thinner with the smooth surface. For this reason, the nickel particle is required to be finer, less agglomeration among nickel particles with sharp particle size distribution. However, when finer nickel particles are prepared with the method described in Patent Document 1, the method may cause a problem that nickel particles precipitated by reduction easily aggregate to remarkably generate coarse particles.

Accordingly, an object of the present invention is to provide fine nickel particles containing few coarse particles and to provide an electroconductive paste using the nickel particles.

### Disclosure of the Invention

Then, the present inventors made an extensive investigate, and as a result, conceived that the above described object can be achieved by adopting the means described below. The prevent invention will be described below.

Method for producing nickel particle: a method for producing a nickel particle according to the present invention is a method of elevating a temperature of the reactive solution containing a nickel salt and a polyol to a reduction temperature to produce a nickel particle by reducing the nickel salt in the reactive solution, and is characterized in that the reactive solution is prepared to contain a carboxylic acid or an amine having a carboxyl functional group and/or an amino functional group, and a precious metal catalyst before when the solution temperature is elevated to the reduction temperature.

The reactive solution contains 0.1 to 30 parts by weight of one or mixture selected from the carboxylic acids or amines having the carboxyl functional group and/or the amino functional group, with respect to 100 parts by weight of nickel.

The reactive solution contains 0.001 to 1 parts by weight of the precious metal catalyst, with respect to 100 parts by weight of nickel.

The precious metal catalyst used in the method for producing the nickel particle according to the present invention is one or mixture selected from platinum, gold, palladium, silver and copper.

The reactive solution contains 0.01 parts by weight to 30 parts by weight of a dispersing agent with respect to 100 parts by weight of nickel.

Nickel particle according to the present invention: A nickel particle according to the present invention is obtained through the above described production method and is characterized in that the nickel particles have an average image analytical particle diameter of 1 nm to 300 nm.

Electroconductive paste: The above described nickel particle according to the present invention is a fine particle and superior in particle dispersibility. Accordingly, an electroconductive paste of high quality can be obtained by using the nickel particle according to the present invention.

A method for producing a nickel particle according to the present invention can efficiently produce the nickel particle which is a fine particle and contains few coarse particles. Also, it is superior in stability of the process and preferable as an industrial production process.

The nickel particle obtained through the production method is a fine particle, contains few coarse particle, and has a sharper particle size distribution compared to a conventional fine nickel particle.

Accordingly, when an electroconductive paste is produced by using the nickel particle according to the present invention, dispersion of the nickel particles dispersed in the electroconductive paste is excellent, and the nickel film obtained by sintering a coated film formed by using the electroconductive paste can be made thin. Furthermore, the particle itself of the nickel particle is fine with an adequate particle size distribution, it may result smooth surface on the nickel film and enhance the adhesion between layers. As a result, when an electroconductive paste according to the present invention is used for an internal electrode of MLCC, the internal electrode layer can be made thinner, the surface of the electrode can be made smooth, the reliability of interlayer connection can be improved. Then, miniaturization of the MLCC and increasing of the capacitance can be achieved.

### Brief Description of the Drawings

Figure 1 is an observed image by an electron microscope on the nickel particles according to the present invention; and
Figure 2 is an observed image by an electron microscope on the nickel particles obtained with a conventional method.

### Best Mode for Carrying Out the Invention

### (Method for producing nickel particle according to the present invention)

The method for producing a nickel particle according to the present invention is a method of elevating a temperature of the reactive solution containing a nickel salt and a polyol to the reduction temperature to produce a nickel particle by reducing the nickel salt in the reactive solution, and is characterized in that the reactive solution is prepared to contain a carboxylic acid or an amine having a carboxyl functional group and/or an amino functional group, and a precious metal catalyst before when the solution temperature is elevated to the reduction temperature.

So, it can be understood that the reactive solution is required to contain at least the nickel salt, the polyol, the carboxylic acids or the amines having the carboxyl functional group and/or the amino functional group, and the precious metal catalyst. A method according to the present invention is characterized in that the method applies adding of the carboxylic acids or the amines having the carboxyl functional group and/or the amino functional group to the reactive solution before when a temperature of the reactive solution is elevated to above described reduction temperature, as for a method to prepare the reactive solution which contains the carboxylic acids or the amines having the carboxyl functional group and/or the amino functional group.

Here, "a time before when a temperature of the reactive solution is elevated to above described reduction temperature" means that the compounds can be added at any point of time before a temperature of the solution reaches at the reduction temperature in elevating of a temperature. Specifically, the point of time includes two addition timings. One of timings for adding is when adjusting the component of the reactive solution before elevating the solution temperature, and another timing for adding is when elevating of a temperature of the reactive solution. Any timing of the two can provide a nickel particle which has a sharp particle size distribution when compared to a conventional nickel particle, and comprises fine particles. However, the most preferable timing of adding the compounds is when adjusting the component before elevating a temperature of the reactive solution. When the carboxylic acids or the amines having the carboxyl functional group and/or the amino functional group is added in elevating temperature of the solution, the added carboxylic acid and/or amine are/is unevenly distributed to result an uneven precipitation of the nickel particle by reduction and may make the precipitated nickel particle remarkably aggregate, depending on the temperature of the reactive solution when the compounds are added.

An order for mixing of the carboxylic acids or the amines with other components is not particularly limited. Specifically, as an order of adding individual components in preparation of the reactive solution containing the carboxylic acids or the amines having a carboxyl functional group and/or an amino functional group, any method in followings can be applicable: (1) mixing the carboxylic acids or the amines with a polyol followed by adding a nickel salt and a precious metal catalyst to the mixture; (2) mixing the carboxylic acids or the amines with a nickel salt followed by adding a polyol and a precious metal catalyst; (3) mixing a nickel salt with a polyol followed by adding the carboxylic acids or the amines and a precious metal catalyst; (4) mixing a nickel salt, a polyol, a precious metal catalyst and the carboxylic acids or the amines at the same time.

A more specific method of preparing the reactive solution which contains above described nickel salt and polyol according to the present invention, for instance, preparation can be performed by charging the nickel salt and polyol into water with agitation of the solution to mix the components. Here, when the precious metal catalyst is blended with the reactive solution, the precious metal catalyst in an aqueous solution like palladium nitrate, the reactive solution can be prepared only by mixing the nickel salt, the polyol and the precious metal catalyst without water. In addition, when the reactive solution is prepared by mixing the nickel salt and the polyol followed by mixing the precious metal catalyst, the reactive solution can also be prepared, for instance, mixing the nickel salt, a part of the polyol, the precious metal catalyst and a dispersive agent which will be described later to form a slurry first followed by mixing the slurry with the rest of the polyol. In followings, the components will be described one by one.

Nickel salt: A nickel salt used in the present invention is not particularly limited, but for instance, nickel hydroxide, nickel sulfate, nickel nitrate, nickel chloride, nickel bromide and nickel acetate can be used. Among the salts, nickel hydroxide is particularly preferable. This is because that the nickel hydroxide generates a little gas when the electroconductive paste containing the nickel particle is sintered to be an internal electrode of MLCC, adequately maintains a film density of the formed nickel film, and the surface roughness of the nickel film can be made low. In the production method according to the present invention, one or combination of two or more selected from above described nickel salt can be used.

The concentration of the nickel salt in the reactive solution employed at this time is preferably arranged into a range of 0.1 g/L to 50 g/L as nickel in the reactive solution. When the nickel concentration is less than 0.1 g/1, the nickel particle can not be produced with an industrial productivity. In addition, the nickel particles precipitated by reduction tend to have deviation in particle size distribution, so it is not preferable. On the other hand, when the nickel concentration exceeds 50 g/1, precipitation of the nickel particle by reduction proceed more rapidly, and it may be difficult to obtain a nickel particle having an adequate particle size distribution.

Polyol: A polyol used in the present invention is a substance having a hydrocarbon chain and a plurality of hydroxyl functional groups. The polyol contains at least one compound selected from the group consisting of ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol, 1,5-pentanediol and polyethylene glycol. Among them, ethylene glycol is preferable because of having a low boiling point, being liquid at room temperature, and being superior in handleability. In the present invention, the polyol performs as both a reducing agent for a nickel salt and a solvent.

The content of the polyol in a reactive solution is not required to be particularly limited, because the content should be appropriately adjusted according to a nickel content in the reactive solution in the view as a reducing agent. However, there is a certain appropriate range in the concentration of the polyol when the polyol is used as a solvent, because the property of the reactive solution changes according to the concentration of the polyol in the reactive solution. The reactive solution used in the present invention preferably contains a polyol in a range of 50 wt% to 99.8 wt% with respect to the reactive solution. Even when the reactive solution contains less than 50 wt% of the polyol, the polyol can reduce a nickel compound in the concentration of the lower limit into nickel and precipitate the nickel particles sufficiently. But it may cause an uneven reducing reaction due to the property of the reactive solution in the reducing reaction, and hardly produces the nickel particle having a sharp particle size distribution. On the other hand, when the reactive solution contains more than 99.8 wt% of the polyol, there is no problem especially, but the concentration exceeds the required amount as a reducing agent in the range of the above described nickel concentration, and it waste the resource.

Carboxylic acid or amine: the reactive solution used in a method for producing the nickel particle in the present invention contains a carboxylic acid or an amine having a carboxyl functional group and/or an amino functional group usually in an amount of 0.1 parts by weight to 30 parts by weight, and preferably in an amount of 1 part by weight to 10 parts by weight with respect to 100 parts by weight of nickel. When the blended quantity of the carboxylic acids or the amines having the carboxyl functional group and/or the amino functional group is in the range, the obtained nickel particles hardly aggregate and easily perform a sharp particle size distribution, so it is preferable. Specifically, when the blending quantity is less than 0.1 parts by weight, the carboxylic acids or the amines shows little effect on inhibiting the nickel particles from aggregating, so it is not preferable. On the other hand, when the blending quantity exceeds 30 parts by weight, the nickel particles remarkably aggregate, so it is not preferable.

The carboxylic acids or the amines having the carboxyl functional group and/or the amino functional group to be added to the reactive solution used in a production method of the nickel particle according to the present invention is preferably one or mixture selected from the group which will be described below.

A method of producing a nickel particle according to the present invention comprises elevating a temperature of the reactive solution to a reduction temperature, and reducing a nickel salt in the reactive solution. In the method, the carboxylic acids or the amines having the carboxyl functional group and/or the amino functional group is added to the reactive solution before when the reactive solution temperature reaches at the reduction temperature. Accordingly, the carboxylic acids or the amines having the carboxyl functional group and/or the amino functional group used in the present invention is not particularly limited, as long as having a boiling point or a decomposition point higher than the reduction temperature. However, the carboxylic acids or the amines selected from the group described below and used in the production process enable stable production, because the nickel particle hardly affected by the deviation of the production process.

The carboxylic acid to be used preferably belongs to an aromatic carboxylic acid and an aliphatic carboxylic acid. More specifically, the aromatic carboxylic acid to be preferably used contains benzoic acid, phthalic acid, isophthalic acid, terephthalic acid, naphthoic acid, toluic acid and hydroxybenzoic acid. The aliphatic carboxylic acid to be preferably used contains, for instance, decanoic acid, dodecanoic acid, sebacic acid, oleic acid, oleic amide and ascorbic acid. In addition, any of structural isomers of the above compounds can also be contained.

When the aromatic carboxylic acid among the above described carboxylic acids is employed, the aromatic carboxylic acid performs a good effect on inhibiting aggregating with each other in nickel particles precipitated by reduction, so it is preferable. Furthermore, a para-formed aromatic carboxylic acid in which the carboxyl functional group directly combined with the benzene ring perform an excellent function in the steric hindrance for inhibiting the aggregation of the particles to results inhibiting of the particles from aggregating with each other to perform a sharper particle size distribution, so it is preferable.

An amine to be used in the present invention preferably belongs to an aromatic amine and an aliphatic amine. More specifically, the aromatic amine to be preferably used contains aniline, toluidine, diaminobenzene, aminobenzamido, aminophenol, 4-aminobenzene hydrazide and aminosalicylic acid. In addition, the aliphatic amine to be preferably used in the present invention contains aminodecane, aminododecane, octylamine and oleylamine. In addition, any structural isomers for the above compounds can also be contained.

When the aromatic amine among the above described amines is employed, the aromatic amine performs a good effect of inhibiting nickel particles precipitated by reduction from aggregating with each other, so it is preferable. In addition, when an aromatic amine having the amino functional group directly combined with the benzene ring among the above aromatic amines is employed, the aromatic amine performs a particularly good effect on inhibiting the nickel particles precipitated by reductions from aggregating with each other, so it is preferable. Furthermore, a para-formed aromatic amine in which the amino functional group directly combined with the benzene ring perform an excellent function in the steric hindrance for inhibiting the aggregation of the particles, inhibits the particles from aggregating with each other, and forms a sharper particle size distribution, which are preferable.

Precious metal catalyst: a precious metal catalyst to be used in the present invention is added into the reactive solution to promote a reaction of reducing a nickel salt with a polyol, and the reactive solution preferably contains 0.001 parts by weight to 1 parts by weight of the precious metal catalyst with respect to 100 parts by weight of nickel. When the reactive solution contains less than 0.001 parts by weight of the precious metal catalyst, the precious metal catalyst cannot promote the reducing reaction, and the addition becomes meaningless. On the other hand, even when the reactive solution contains more than 1 part by weight of the precious metal catalyst, the precious metal cannot further promote the reducing reaction in a relation with a nickel concentration in the reactive solution, so it wastes the resource.

The precious metal catalyst in the present invention contains : (A) a palladium compound such as palladium chloride, palladium nitrate, palladium acetate and palladium ammonium chloride; (B) a silver compound such as silver nitrate, silver lactate, silver oxide, silver sulphate, silver cyclohexanoate and silver acetate; (C) a platinum compound such as chloroplatinic acid, potassium chloroplatinate and sodium chloroplatinate; and (D)a gold compound such as chlorauric acid and sodium chloraurate. Among the precious metals, palladium nitrate, palladium acetate, silver nitrate or silver acetate is preferable, because the price of the raw material is cheep and the production cost can be reduced. The catalyst can be used by adding to the reactive solution in a form of the above described compounds or as a solution having the compound dissolved therein.

Other additives: indispensable components in the reactive solution were described above. In addition, various kinds of additives can be added in the reactive solution, as required. However, among the additives, a dispersing agent is preferably added, as required. The dispersing agent is added to be adsorbed on the surface of the precipitated particle, and forms an aggregation-preventing barrier thereon, so as to prevent the nickel particles precipitated by reduction in the reactive solution from spontaneously aggregating in the reactive solution to result degrading of the particle size distribution.

In the above described dispersing agents, for instance: a nitrogen-containing organic compound such as polyvinylpyrrolidone, polyethylenimine, polyacrylamide and poly (2-methyl-2-oxazoline); and polyvinyl alcohol can be used. Above all, polyvinylpyrrolidone is preferable because it performs a remarkable effect as the dispersing agent, and can maintain the particle size distribution of the obtained nickel particles sharp.

The above described dispersing agent according to the present invention can be used alone or in combination of two or more types. The above described reactive solution preferably contains 0.01 to 30 parts by weight of the dispersing agent with respect to 100 parts by weight of nickel. When the amount of the dispersing agent is less than 0.01 parts by weight, the effect of prevention of the aggregation on nickel particles precipitated by reduction in the reactive solution cannot be obtained. On the other hand, when the amount of the dispersing agent exceeds 30 parts by weight, the effect of preventing the aggregation of the nickel particles precipitated by reduction in the solution is not improved. On the contrary, the amount of impurities on the surface of the precipitated nickel particles increases because a large amount of the dispersing agent remains, and results the increase in the electrical resistance of an electroconductive film which has been formed by using an electroconductive paste prepared by using the nickel particles.

Reduction temperature: the reduction temperature to be employed in the method for producing the nickel particles according to the present invention is usually in a range of 150°C to 210°C. When the reduction temperature is lower than 150°C, a reducing reaction slows down to result an unsatisfactory industrial productivity. On the other hand, the reduction temperature exceeding 210°C is not preferable because of increasing the reduction rate into an uncontrollable range and simultaneously causing the precipitation of nickel carbide. The reduction temperature to be employed is preferably at 160°C to 200°C, and further preferably is at 180°C to 200°C. The reduction temperature in the range shows the excellent stability of a process with little deviation in the quality of the nickel particles to be obtained even when a temperature in a mass production step or a reactive solution composition slightly changes.

The reactive solution elevated at the above described reduction temperature is kept at the reduction temperature until the reducing reaction finishes. The appropriate keeping time in the above step varies depending on the composition and reduction temperature of the reactive solution and cannot be simply specified, but keeping time for usual is in 1 hour to 10 hours and preferable is in 3 hours to 8 hours. When the reactive solution is kept for the above range of time at the above described reduction temperature, in a reaction system, the growth of the nuclear of the nickel particle is adequately suppressed and a number of the nuclei of the nickel particles are easily produced. Accordingly, the nickel particles approximately uniformly grow in the system, and are inhibited from to be coarse or aggregating with each other. As a result, assuming adopting of the above described composition and reduction temperature range for reactive solution, when the keeping time is shorter than 1 hour, the reducing reaction is not finished, and a large amount of nickel remains in the waste water, which increases a waste treatment load and wastes nickel as a natural resource. On the other hand, even when the keeping time exceeds 10 hours, no more nickel precipitate by reduction with the nickel compound in the reactive solution consumed to be a trace amount. With consideration on industrial productivity, the keeping time is preferably set at 3 hours to 8 hours in order to minimize the quality deviation of the nickel particle products provided. After the reactive solution has been kept at the reduction temperature for the keeping time according to the present invention, the temperature of the reactive solution may be out of the range of the above described reduction temperature. For instance, the temperature of the reactive solution may be set at a temperature exceeding the above described reduction temperature. When the nickel particle is obtained by using the above described reactive solution and through the above described steps, the nickel particle may have physical properties described below.

### (Nickel particle according to the present invention)

Nickel particle according to the present invention is the nickel particle produced by the above described method for producing nickel particles according to the present invention, and is a powder showing approximately spherical shape. The nickel particles according to the present invention have an average image analytical particle diameter of normally 1 nm to 300 nm and preferably 50 nm to 150 nm. The average image analytical particle diameter of 1 nm is a tentatively decided to be lower limit, because the particles having a particle size of less than 1 nm are too small to be precisely observed. When the average image analytical particle diameter exceeds 300 nm, an electroconductive paste containing the nickel particles may fail to form a sufficiently thin film but a thick film containing the nickel particles, and may loose smoothness of the surface of the obtained nickel thick layer, which are not preferable. In the present invention, the average image analytical particle diameter is an average particle diameter of the nickel particles obtained by image analysis on the image which has been obtained by using a field emission type scanning electron microscope (FE-SEM) or a transmission electron microscope (TEM). (The nickel particles according to the present invention are preferably observed with a magnification of 50,000 times or more). In the present specification, the image analysis on the nickel particle diameter to obtain average image analytical particle diameter is performed by observing the nickel particle with the scanning electron microscope (SEM), analyzing the image of circular particles in 10 visual fields on conditions of a circular degree threshold value of 10 and an overlapping degree of 20 by using an IP-1000PC manufactured by Asahi Kasei Engineering Corporation.

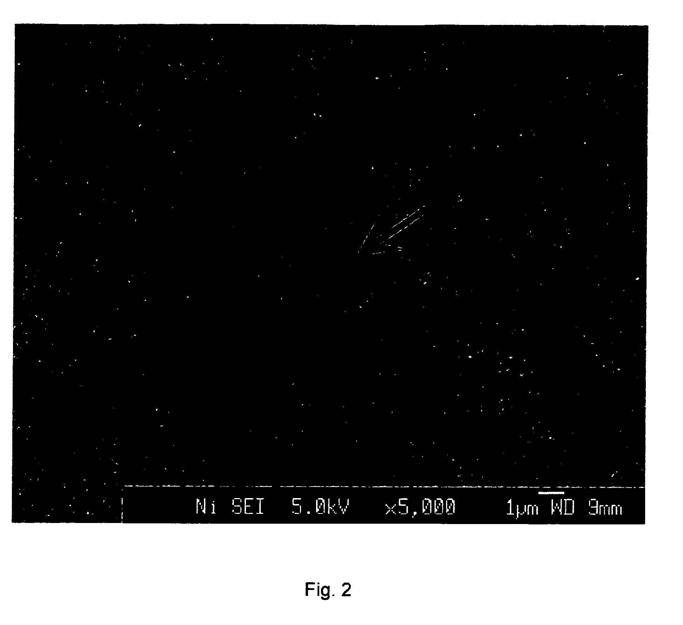

In addition, a generally used accumulative volume particle diameter which is determined by using a laser diffraction scattering technique was not employed for an index of a particle size distribution of nickel particles according to the present invention, because the laser diffraction scattering technique was considered to have a problem in measurement accuracy since the nickel particle has such a fine diameter as 1 nm to 300 nm. In place of the method, an alternative method was employed which consists of directly observing the nickel particles in 100 visual fields with a field emission type scanning electron microscope (FE-SEM: with magnification of 5,000 times), and counting the number of coarse particles with sizes of 1 µm or larger. The counted number is referred to as "coarse particle number". The coarse particle described here is a coarse particle with a size of 1 µm or larger, which has been formed of a number of aggregating particles each with a particle diameter of a nanometer order. In the present invention, the number of the coarse particles and the average image analytical particle diameter were both used as indices for determining the state of a particle size distribution. As a result, the nickel particles according to the present invention has 0 to 2 pieces of the coarse particles. The actually formed coarse particles are formed of a number of aggregating fine particles each with a size of a nanometer order, and it can be understood by referring to a Comparative Example in Figure 2 that will be shown later.

### (Electroconductive paste according to the present invention)

An electroconductive paste according to the present invention contains nickel particles according to the present invention, and a resin and a solvent as well other than the nickel particles. The resin to be used in the present invention contains, for instance: a cellulose such as ethyl cellulose and nitrocellulose; and an acryl resin such as butyl methacrylate and methyl methacrylate. In the present invention, the above described resins can be used alone, or blended with other one or more of the resins. In addition, a solvent to be used in the present invention contains, for instance: a terpene such as terpineol and dihydroterpineol; and an alcohol such as octanol and decanol. In the present invention, the above described solvent can be used alone, or in a mixed with other one or more of the solvents.

An electroconductive paste according to the present invention contains the nickel particle according to the present invention normally in a range of 40 wt.% to 70 wt.%, and preferably in a range of 50 wt.% to 60 wt.%. When the content of the above described nickel particles is in the range, the paste may have adequate electroconductivity, high packing ability and excellent thermal contraction resistance, so it is preferable.

An electroconductive paste containing the nickel particles according to the present invention dispersed therein can be obtained by mixing the nickel particles, for instance, with a well-known paste to be used for producing an electroconductive paste. The electroconductive paste can be used as a nickel paste, for instance, to be used for forming an internal electrode of a MLCC.

Examples will now be shown below, but the present invention is not limited to them.

### [Examples]

Nickel particles were obtained in a slurry form by mixing nickel hydroxide (made by OM Group, Inc.), an aqueous palladium nitrate solution with concentration of 100 g/l (made by Tanaka Kikinzoku Kogyo K.K.), polyvinylpyrrolidone K30 (made by Wako Pure Chemical Industries, Ltd.), and a carboxylic acid or an amine having a carboxyl functional group and/or an amino functional group were charged into a tank where ethyleneglycol (made by Mitsui Chemicals, Inc.) in a fixed amount of 445.3 g is charged, followed by elevating a temperature of the mixture with agitation, and keeping the mixture for a predetermined period. Conditions such as a concentration in production are listed in Table 1,
in which six conditions were adopted as Examples. Accordingly, the Examples are referred to as Example 1 to Example 6, in Table 1.

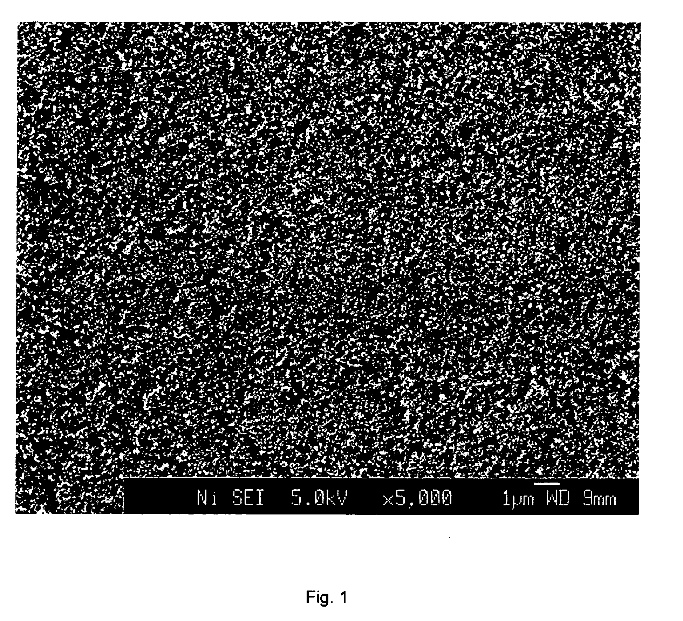

Nickel particles are obtained by suction-filtrating the nickel slurry followed by drying the precipitate at 80°C for five hours. Then, an average image analytical particle diameter and a standard deviation of the image analytical particle diameter were determined by observing the nickel particle through a field emission type scanning electron microscope (FE-SEM) with a magnification of 100,000 times followed by analyzing the observed image. Furthermore, the number of coarse particles were measured by observing the images of 100 visual fields through the above described scanning electron microscope with the magnification of 5,000 times. The results in Example 1 to Example 6 with Comparative Examples were summarized in Table 2 to ease comparison.
In addition, the electron microscope photograph of the typical nickel particles obtained in the Examples is shown in Figure 1.

### [Comparative Examples]

Nickel particles were obtained in a slurry form by mixing nickel hydroxide (made by OM Group, Inc.), an aqueous palladium nitrate solution with concentration of 100 g/l (made by Tanaka Kikinzoku Kogyo K.K.), and polyvinylpyrrolidone K30 (made by Wako Pure Chemical Industries, Ltd.) into the tank where ethyleneglycol (made by Mitsui Chemicals, Inc.) in a fixed amount of 445.3 g is charged followed by elevating a temperature of the mixture with agitation; and keeping the mixture for a predetermined period. Specifically, the Comparative Example is different from the Examples in a point of using no carboxylic acid nor amine having a carboxyl functional group and/or an amino functional group therein. Conditions such as a concentration in production are listed in Table 1 together with those of the Examples, in which two conditions were adopted as Comparative Examples. Accordingly, the Comparative Examples are referred to as Comparative Example 1 and Comparative Example 2.

Then, an average image analytical particle diameter and a standard deviation of the image analytical particle diameter were determined after suction-filtrating of the nickel slurry and carrying out the same procedures as in the Examples. Furthermore, the number of coarse particles was measured by observing the images of 100 visual fields through the above described scanning electron microscope with the magnification of 5,000 times. The results in Comparative Example 1 and Comparative Example 2 with Examples were summarized in Table 2 to ease comparison. In addition, the electron microscope photograph of the typical nickel particles obtained in the Comparative Examples is shown in Figure 2.

**[Table 1]**

| | Ethylene glycol [g] | Nickel hydroxide [g] | Palladium nitrate (100g/L) [µL] | PVP [g] | Additives | | Reaction temperature [°C] | Reaction period [h] |
|---|---|---|---|---|---|---|---|---|
| | | | | | Type | Added amount [g] | | |
| Ex. 1 | 445.3 | 40.9 | 8.4 | 1.68 | Benzoic acid | 1 | 190 | 7 |
| Ex. 2 | 445.3 | 40.9 | 8.4 | 1.68 | Decanoic acid | 1 | 190 | 7 |
| Ex. 3 | 445.3 | 40.9 | 8.4 | 1.68 | Aniline | 1 | 180 | 9 |
| Ex. 4 | 445.3 | 31.3 | 130 | 2.15 | p-toluic acid | 1 | 190 | 6 |
| Ex. 5 | 445.3 | 31.3 | 650 | 2.15 | p-aminobenzoic acid | 1 | 190 | 5 |
| Ex. 6 | 445.3 | 81.8 | 17 | 8.4 | Benzoic acid | 2 | 190 | 8 |
| Com. Ex. 1 | 445.3 | 31.3 | 130 | 2.15 | none | - | 190 | 7 |
| Com. Ex. 2 | 445.3 | 31.3 | 650 | 2.15 | none | - | 190 | 6 |

**[Table 2]**

| | Average image analytical particle diameter [nm] | Standard deviation [nm] | Number of coarse particles [> 1 µm, pieces] |
|---|---|---|---|
| Ex. 1 | 171 | 44.2 | 0 |
| Ex. 2 | 158 | 45.1 | 1 |
| Ex. 3 | 161 | 43.3 | 0 |
| Ex. 4 | 97.3 | 21.4 | 0 |
| Ex. 5 | 58.3 | 14.2 | 1 |
| Ex. 6 | 101.5 | 24.4 | 1 |
| Com. Ex. 1 | 91.8 | 20.9 | 11 |
| Com. Ex. 2 | 62.3 | 15.5 | 41 |

### <Comparison between Examples and Comparative Examples>

As is understood from an average image analytical particle diameter of Example 1 to Example 6 in Table 2, products with various particle diameters in a range of 58.3 nm to 171 nm are obtained. In addition, the standard deviations of the image analytical particle diameter of Example 1 to Example 6 are 14.2 nm to 45.1 nm. In general, the larger is an average image analytical particle diameter, the larger is a standard deviation of the image analytical particle diameter, such point of the tendency is the technological common sense. However, a standard deviation is a converted value from particle diameters measured on each particle when the average image analytical particle diameter is determined by an image analysis technique, and accordingly does not completely reflect powder characteristics of a actual product.

When looking at the average image analytical particle diameters and the standard deviations of the image analytical particle diameters of the Comparative Example 1 and the Comparative Example 2, the Comparative Example 1 shows the average of 91.8 nm and the standard deviation of 20.9 nm, and the Comparative Example 2 shows the average image analytical particle diameter of 62.3 nm and the standard deviation of the image analytical particle diameter of 15.5 nm. So, it is considered to be preferable to compare the Comparative Example 1 with the Example 4 and to compare the Comparative Example 2 with the Example 5.

Here, the values of average image analytical particle diameters and standard deviations of the image analytical particle diameters were compared between the Comparative Example 1 and the Example 4 and between the Comparative Example 2 and the Example 5, but there is no obvious difference.

However, when the numbers of coarse particles actually observed are compared between the Comparative Example 1 and the Example 4 and between the Comparative Example 2 and the Example 5, the numbers are quite different in the respective comparisons. The numbers of coarse particles in the Comparative Examples exceed 10, which are much more than the numbers in the Examples (less than 2).

In the case of the Examples, all Examples 1 to 6 show the number of coarse particles of less than 2. In other words, containing of the coarse particles in the Examples are extremely few without depending on the particle diameters.

The level of coarse nickel particles actually obtained in Examples and Comparative Examples are clear from comparison within Figure 1 and Figure 2. In Figure 2, there found such coarse particles as pointed by the arrow, but there does not found such a coarse particle in Figure 1. The nickel particles in Figure 1 and Figure 2 were observed after placing the nickel slurry dropwise on a platform for a scanning electron microscope followed by drying to solidify the nickel slurry to form a dried film with a thickness corresponding to the diameter of one particle to two particles, then the nickel particles were observed by the scanning electron microscope with a magnification of 5,000 times. The state of the surface in Figure 1 is uniform and shows no abnormality. In contrast, the state of the surface in Figure 2, the coarse particles pointed by the arrow is observed on the dried film and a number of cracks are observed around it. This is considered to be because when the dried film is formed, the coarse particles roll on the film to damage the surface of the dried film.

### Industrial Applicability

The method for producing nickel particles according to the present invention enables efficient production of the nickel particles which are fine and include few coarse particles. Accordingly, the production method can reduces a management cost for controlling the process, and the industrial production process is preferable for providing fine nickel particles of high quality with low price.

In addition, nickel particles obtained by the production method are fine and include few coarse particles, and has a sharp particle size distribution. Accordingly, an electroconductive paste using the nickel particles according to the present invention can make a internal electrode of MLCC thinner, simultaneously make the surface of the electrode smooth, improve the reliability of interlayer connection, miniaturize the MLCC and increase the capacitance.

## Claims

1. A method for producing a nickel particle by reducing the nickel salt in the solution comprising heating a reactive solution containing a nickel salt and a polyol to a reduction temperature, **characterized in that**
the reactive solution is prepared to contain a carboxylic acid or an amine having a carboxyl functional group and/or an amino functional group, and a precious metal catalyst before when the solution temperature is elevated to the reduction temperature.

2. The method for producing the nickel particle according to claim 1, **characterized in that** the reactive solution contains 0.1 to 30 parts by weight of one or mixture selected from the carboxylic acids or the amines having the carboxyl functional group and/or the amino functional group, with respect to 100 parts by weight of nickel.

3. The method for producing the nickel particle according to claim 1 or 2, **characterized in that** the reactive solution contains 0.001 to 1 parts by weight of a precious metal catalyst, with respect to 100 parts by weight of nickel.

4. The method for producing the nickel particles according to claim 3, wherein the precious metal catalyst is one or mixture selected from platinum, gold, palladium, silver and copper.

5. The method for producing the nickel particles according to any one of claim 1 to claim 4, **characterized in that** the reactive solution contains 0.01 parts by weight to 30 parts by weight of a dispersing agent with respect to 100 parts by weight of nickel.

6. Nickel particles obtained with the production method according to any one of claim 1 to claim 5, **characterized in that** the nickel particles have an average image analytical particle diameter of 1 nm to 300 nm.

7. An electroconductive paste **characterized in that** the paste contains the nickel particle according to claim 6.
